(19) Europäisches Patentamt
European Patent Office
Office européen des brevets

(11) Veröffentlichungsnummer: **0 401 780 A2**

(12) # EUROPÄISCHE PATENTANMELDUNG

(21) Anmeldenummer: **90110690.6**

(51) Int. Cl.5: **C08F 18/00, C11D 3/37**

(22) Anmeldetag: **06.06.90**

(30) Priorität: **07.06.89 DE 3918525**

(43) Veröffentlichungstag der Anmeldung:
**12.12.90 Patentblatt 90/50**

(84) Benannte Vertragsstaaten:
**BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Gethöffer, Hanspeter, Dr.**
**Geisenheimer Strasse 97**
**D-6000 Frankfurt am Main 71(DE)**
Erfinder: **Reinhardt, Gerd, Dr.**
**Freiherr-vom-Stein-Strasse 37**
**D-6233 Kelkheim (Taunus)(DE)**
Erfinder: **Miller, Dennis, Dr.**
**Breslauer Strasse 20**
**D-6233 Kelkheim/Taunus(DE)**

(54) **Polymerisate, Verfahren zu deren Herstellung und deren Verwendung als Bleichaktivatoren mit Buildereigenschaften.**

(57) Polymerisate aus 5 bis 100 Gew.% eines oder mehrerer Acylale der Formel I

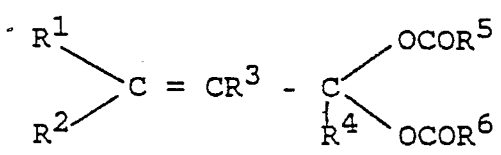

(I)

und 95 bis 0 Gew.% einer oder mehrerer ungesättigter Carbonsäuren der Formel II

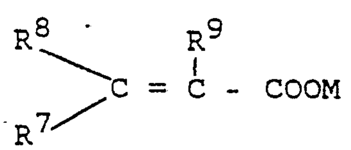

(II)

wobei die Symbole $R^1$, $R^2$, $R^3$, $R^4$, $R^5$, $R^6$, $R^7$, $R^8$, $R^9$ und M die in der Beschreibung genannten Bedeutungen haben. Diese Polymerisate eignen sich als Bleichaktivatoren in Waschmitteln und besitzen gleichzeitig eine Wirkung als Builder.

EP 0 401 780 A2

## Polymerisate, Verfahren zu deren Herstellung und deren Verwendung als Bleichaktivatoren mit Buildereigenschaften

Der Wunsch nach Energieeinsparung, eine veränderte Zusammensetzung des Textilgutes und gesteigertes Umweltbewußtsein haben in den letzten 20 Jahren zu veränderten Waschbedingungen geführt. So wurde das seit Jahren erfolgreich als Builder eingesetzte Tripolyphosphat durch umweltfreundlichere Ersatzstoffe substituiert. Bekanntestes Beispiel dafür ist Zeolith A.

Aus Kostengründen konnten sich bisher noch keine organischen Buildermoleküle durchsetzen. Eine Ausnahme bilden hier die polymeren Carbonsäuren wie Polyacrylsäure oder Mischpolymerisate auf Basis Acrylsäure und Maleinsäure bzw. Maleinsäureanhydrid. Die Verbindungen können für sich allein oder in Kombination mit Zeolith oder Schichtsilikaten eingesetzt werden. In diesen Kombinationen wirken sie als Carrier für Calcium- und Magnesiumionen.

Im Zusammenhang mit dem Wunsch nach Energieeinsparung ist auch die Absenkung der Waschtemperatur zu sehen.

Einen entscheidenden Beitrag zur Absenkung der Waschtemperatur von 90 °C auf 40-60 °C brachte die Einführung eines Bleichsystems auf Aktivator/Persalz-Basis. Von den zahlreichen in der Patentliteratur (z.B. US 4.248.928) beschriebenen potentiellen Perborataktivatoren haben insbesondere N- und O-acylierte Verbindungen wie Tetraacetylethylendiamin (TAED), Pentaacetylglukose (PAG), Tetraacetylglycoluril (TAGU) und Acyloxibenzolsulfonate kommerzielles Interesse gefunden.

Bereits in GB 836,988 werden Verbindungen, die an einem Kohlenstoff zwei Esterfunktionen tragen (im Folgenden kurz Acylale genannt) als Aktivatoren beansprucht. In EP 125781 werden analoge Verbindungen dieser Klasse wie Ethylidendiacetat, Ethylidenbenzoatacetat und Tetraacetylglutardialdehyd als effektive Perborataktivatoren beschrieben. In DE 3,729,074 werden flüssige Acylale als Bleichmittelkomponenten für Flüssigwaschmittel vorgeschlagen. Ein Nachteil der bisher beschriebenen Aktivatoren auf Acylalbasis ist jedoch, daß die neben der Persäure gebildeten Perhydrolyseprodukt keine weitere Funktion in der Waschmittelflotte besitzen.

Es besteht daher weiterhin ein großer Bedarf an Aktivatoren für Persalze in Wasch-, Reinigungs- und Desinfektionsmitteln, die neben der Aktivierung einer Perverbindung unter Bildung einer Persäure zusätzliche Wascheffekte in der Waschflotte bewirken.

Es wurde nun gefunden, daß Polymerisate aus ungesättigten Acylalen mit ungesättigten organischen Carbonsäuren wie Acrylsäure oder Methacrylsäure sowohl persalzaktivierende Eigenschaften haben, als auch als Buildermoleküle in der Waschflotte wirksam sind.

Gegenstand der Erfindung sind Homo- und Copolymerisate aus 5 bis 100 Gew.-% eines oder mehrerer Acylale der Formel I

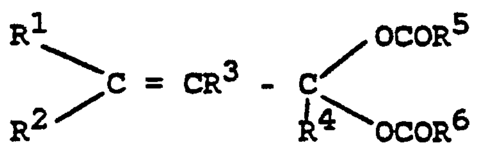

(I)

worin

$R^1$ Wasserstoff, $C_1$-$C_4$-Alkyl, Phenyl oder eine Gruppe der Formel

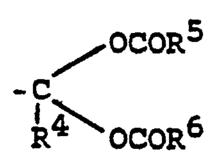

$R^2$ Wasserstoff oder $C_1$-$C_4$-Alkyl,

$R^3$ Wasserstoff, $C_1$-$C_4$-Alkyl oder Phenyl,

$R^4$ Wasserstoff, $C_1$-$C_4$-Alkyl oder Phenyl,

$R^5$ und $R^6$, die jeweils gleich oder verschieden sein können, Wasserstoff, $C_1$-$C_9$-Alkyl, $C_2$-$C_9$-Alkenyl oder Phenyl oder

$R^5$ und $R^6$ zusammen $C_1$-$C_4$-Alkylen, $C_2$-$C_4$-Alkenylen oder Phenylen bedeuten, und 95 bis 0 Gew.-% einer oder mehrerer ungesättigter Carbonsäuren oder deren Salze der Formel II

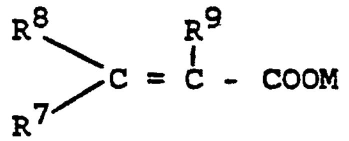

(II)

worin

$R^7$ Wasserstoff, $C_1$-$C_4$-Alkyl, Phenyl oder eine Gruppe der Formeln -$C_1$-$C_4$-Alkyl-COOM oder -$C_6H_5$-COOM,

$R^8$ Wasserstoff, $C_1$-$C_4$-Alkyl, Phenyl oder eine Gruppe der Formel -COOM

$R^9$ Wasserstoff, $C_1$-$C_4$-Alkyl, Phenyl, Hydroxyl, Chlor, Brom oder eine Gruppe der Formel -$C_1$-$C_4$-Alkyl-COOM oder -$C_6H_5$-COOM und

M Wasserstoff, Ammonium, ein Alkalimetall-Atom oder das Äquivalent eines Erdalkalimetall-Atoms bedeuten, sowie ein Verfahren zur Herstellung dieser Polymerisate und deren Verwendung als Peroxidaktivatoren und Builder in Wasch-, Reinigungs- und Desinfektionsmitteln.

Bevorzugt sind solche Polymerisate, die aus einem Acylal der Formel I, wobei $R^1$ Wasserstoff, Methyl oder Phenyl, $R^2$ Wasserstoff oder Methyl, $R^3$ Wasserstoff oder Methyl, $R^4$ Wasserstoff oder $C_1$-$C_4$-Alkyl, $R^5$ und $R^6$ $C_1$-$C_9$-Alkyl oder Phenyl bedeuten, und einer ungesättigten Carbonsäure der Formel II, wobei $R^7$ Wasserstoff, Methyl, -COOM oder Phenyl, $R^8$ Wasserstoff und $R^9$ Wasserstoff oder Methyl bedeuten und M die zuvor genannten Bedeutungen hat, aufgebaut sind.

Besonders bevorzugt sind die Acylale des Acroleins, Methacroleins, Crotonaldehyds und Zimtaldehyds, besonders bevorzugte Carbonsäuren sind Acrylsäure und Methacrylsäure.

Bevorzugte Polymere im Sinne der Erfindung sind Copolymere aus Acroleindiacetat und Acrylsäure, Acroleindiacetat und Methacrylsäure, Acroleindinonanoat und Acrylsäure oder Mischcopolymerisate aus Acroleindiacetat mit Acroleindinonanoat und Acrylsäure, Acroleindiacetat mit Acroleindibenzoat und Acrylsäure und Acroleindiacetat mit Acroleindibenzoat, Acroleindinonanoat und Acrylsäure. Der Vorteil der Mischcopolymerisat besteht in der Bildung verschiedener Peroxicarbonsäuren, die sich in ihren Bleicheigenschaften ergänzen.

Bevorzugt sind ebenso solche Copolymerisate, die aus 5 bis 50 Mol.-% eines Acylals der Formel I und 95 bis 50 Mol.-% einer ungesättigten Carbonsäure der Formel II bestehen.

Die Herstellung der monomeren Acylale der Formel I erfolgt nach diversen, an sich bekannten Verfahren (s. Houben-Weyl, Methoden der Organischen Chemie, Bd. VII/1, S. 442). Zweckmäßigerweise erhält man diese Verbindungen durch Umsetzung eines Aldehyds oder eines Dialdehyds mit einem Carbonsäureanhydrid.

Die Polymerisationen können in Substanz oder in Lösung durchgeführt werden. Als Lösemittel eignen sich Toluol, Xylol oder ähnliche aprotische Lösemittel. Zur Initiierung der Polymerisationsreaktion können Licht, Hitze oder übliche Radikalstarter, wiebeispielsweise Di-benzoylperoxid oder Azo-iso-butyronitril, eingesetzt werden. Beide Komponenten können vorgemischt oder erst während der Reaktion vereinigt werden. Zweckmäßigerweise wird die reaktivere Komponente während der Reaktion zugetropft. Die Reaktionstemperatur richtet sich nach der Reaktivität der eingesetzten Komponenten des Radikalstarters und nach dem gewünschten Polymerisationsgrad. Im allgemeinen sind Reaktionstemperaturen von 60 bis 150 °C ausreichend. Neben Copolymeren aus zwei Monomeren ist auch die Herstellung von Copolymeren mit mehreren Acylal-Monomeren oder mehreren ungesättigten Carbonsäuren-Monomeren möglich.

Die Polymerisate werden nach der Isolierung in Form weißer Pulver erhalten. Sie können in dieser Form direkt eingesetzt werden oder durch Granulierung oder Agglomeration in eine stabilere Lagerform überführt werden.

In Kombination mit Wasserstoffperoxid setzen die beanspruchten Polymerisate in wäßrigen Lösungen schon bei Temperaturen unterhalb von 60 °C stark oxidierend und desinfizierend wirkende Peroxicarbonsäuren frei. An Stelle von Wasserstoffperoxid können auch, wie meist üblich, Natriumperborat-tetrahydrat, Natriumperborat-monohydrat, Natriumpercarbonat, Natriumpersulfat oder Natriumperphosphat, die entsprechenden Kaliumsalze oder Wasserstoffperoxidharnstoffaddukte eingesetzt werden. Zur optimalen Nutzung der persalzaktivierenden Eigenschaften der erfindungsgemäßen Polymerisate beträgt das Molverhältnis von aktiver Acylalgruppe zu Wasserstoffperoxid 1:0,5-2,5. Es wird angenommen, daß während oder nach erfolgter Perhydrolyse die gebildete Carbonylgruppe zur Carbonsäurefunktion oxidiert wird. Dadurch werden

zusätzliche Carbonsäuregruppen gebildet und somit die Anzahl der Carboxyleinheiten pro Polymer erhöht. Die beanspruchten Polymerisate erweisen sich außerdem sowohl in Acylalform als auch nach erfolgter Perhydrolyse als sehr gute Buildermoleküle mit guter $CaCO_3$-Dispergierfähigkeit. In hartem Wasser unterstützen sie die Waschwirkung von calciumsensitiven Tensiden.

Die Einsatzmengen betragen 1 - 50 Gew.-%, vorzugsweise 1 -20 Gew.-% in der Waschmittelformulierung. Die Substanzen können auch in Kombination mit anderen Buildern oder Aktivatoren eingesetzt werden. Insbesondere haben sich hier Kombinationen mit Zeolithen oder Schichtsilikaten bewährt. Es wird angenommen, daß die erfindungsgemäßen Polymerisate in diesen Kombinationen Carrierfunktionen übernehmen, wie sie bei Verwendung der bereits bekannten Copolymerisate von Acrylsäure mit Maleinsäure beschrieben sind. Die Einsatzmengen in Kombination mit Zeolith oder Schichtsilikaten betragen 0,5 - 20 %, vorzugsweise 0,5 -10 %.

**Beispiel 1**

Copolymer aus Acroleindiacetat und Acrylsäure

75 g (0,5 Mol) Acroleindiacetat werden in 200 g Toluol gelöst und auf 50 °C erhitzt. Nach Zugabe von 1,5 g Dibenzoylperoxid (50 % in Phthalat) wird auf 80 °C erhitzt und bei dieser Temperatur während 1 h 36 g (0,5 Mol) frisch destillierte Acrylsäure zugetropft. 30 Minuten nach erfolgtem Zutropfen fällt das Copolymerisat aus. Dabei steigt die Temperatur auf 95 °C. Es wird noch 2 h bei 80-95 °C gerührt, auf RT abgekühlt und der Niederschlag abgesaugt. Nach gründlichem Waschen mit Toluol wird bei 80 °C im Wasserstrahlvakuum bis zur Gewichtskonstanz getrocknet.

Ausbeute:
46,6 g weißes Pulver, das aus
10 Mol-% einpolymerisiertem Acroleindiacetat und
90 Mol-% einpolymerisierter Acrylsäure besteht (400 MHz $^1$H-NMR)
$M_w$: 43.000 (Lichtstreuung)
K-Wert (nach Fikentscher): 38,3

**Beispiel 2**

Copolymer aus Acroleindiacetat und Methacrylsäure

316 g (2 Mol) Acroleindiacetat werden in 600 g Toluol gelöst und auf 50 °C erhitzt. Nach Zugabe von 3 g Dibenzoylperoxid (50 % in Phthalat) wird auf 80 °C erhitzt und bei dieser Temperatur während 1 h 20 min 172,2 g (2 Mol) Methacrylsäure zugetropft. Das Copolymer beginnt bereits 10 min nach Beginn des Zutropfens auszufallen, wobei eine schwache Erwärmung der Reaktionsmischung auf 92 °C stattfindet. Es wird 2 h bei 80 °C nachgerührt, auf RT abgekühlt und der Niederschlag abgesaugt. Nach mehrmaligem gründlichen Waschen mit Toluol wird bei 100 °C im Wasserstrahlvakuum bis zur Gewichtskonstanz getrocknet.

Ausbeute:
184 g weißes Pulver, das aus
8 Mol-% einpolymerisiertem Acroleindiacetat und
92 Mol-% einpolymerisierter Acrylsäure besteht (400 MHz $^1$H-NMR)
K-Wert: 28.9

**Beispiel 3**

Copolymer aus Acroleindipropionat und Acrylsäure

182 g (1 Mol) Acroleindipropionat werden in 300 g Toluol gelöst und auf 50 °C erhitzt. Nach Zugabe von 1,5 g Dibenzoylperoxid (50 % in Phthalat) wird auf 80 °C erhitzt und 72 g (1 Mol) Acrylsäure während 1

h zugetropft. Kurz nach Beginn des Zutropfens fängt das Copolymerisat an auszufallen. Dabei erwärmt sich die Reaktionsmischung auf 96 °C. Es wird noch 3 h bei 80-95 °C gerührt, auf Raumtemperatur abgekühlt und der Niederschlag abgesaugt. Nach gründlichem Waschen mit Toluol wird bei 80 °C im Wasserstrahlvakuum bis zur Gewichtskonstanz getrocknet.

Ausbeute:
80,5 g weißes Pulver, das aus
8 Mol-% einpolymerisiertem Acroleindipropionat und
92 Mol-% einpolymerisierter Acrylsäure besteht (400 MHz $^{1}$H-NMR)
K-Wert: 45,4

Zur Rückgewinnung von nicht einpolymerisiertem Acylal wird das Toluol abdestilliert und der Rückstand im Ölpumpenvakuum destilliert.

**Beispiel 4**

Die Bindung von $Ca^{++}$ durch ein erfindungsgemäßes Polymerisat wurde mit Hilfe einer ionenempfindlichen Elektrode untersucht. Die Messungen wurden bei 23 °C in einem Puffer bestehend aus 0,03 M $NH_4Cl$ und 0,07 M $NH_3$ (pH 9,5) durchgeführt. Es wurde die Menge NaOH zugegeben, die nötig war, um das Polymerisat zu neutralisieren. Die Polymerkonzentration der Lösung bezog sich dabei auf das Natriumsalz.

Eine konstante Calciumkonzentration (0,002 M) wurde benutzt. Mit Hilfe einer Eichkurve wurde aus der Elektrodenspannung die Menge an freiem Calcium berechnet. Der Verlauf der Kurve, die die Konzentration an freiem Calcium in Abhängigkeit von der Polymerkonzentration darstellt, wird in Abb. 1 gezeigt.

Die Tatsache, daß die Konzentration an freiem Calcium auf einen geringen Wert herabgesetzt werden kann, zeigt, daß das Polymer Calcium stark bindet. Als einfache Auswertung kann das Calciumbindevermögen berechnet werden, indem man das Verhältnis [gebundenes Calcium]/[Polymer] auf [Polymer] $\rightarrow$ 0 extrapoliert. Daraus folgt, daß 1 g Polymer (Natriumsalz) $3,7 \cdot 10^{-3}$ Mol Calcium binden kann.

**Beispiel 5**

Waschversuche im Launder-o-meter (Builder-Wirkung)

Die Versuche wurden in einem Launder-o-meter bei 40 °C und einer Waschzeit von 30 min durchgeführt. Als Tensid wurden 0,5 g/l Alkylbenzolsulfonat eingesetzt, mit Natronlauge wurde der pH-Wert auf 10 eingestellt. Als Testanschmutzung wurden jeweils 4 Streifen Standard-Anschmutzung auf Baumwolle eingesetzt. Als Builder wurden das erfindungsgemäße Copolymerisat PBA gemäß Beispiel 1, ein Acrylsäure/Maleinsäure Copolymerisat (Sokolan CP5) und Nitrilotriessigsäure (NTA) eingesetzt. Die Builderkonzentrationen betrugen 0; 0,25; 0,5; 0,75; 1,0; 1,5 und 2 g/l. Die Differenz zu 2 g/l wurde jeweils durch Natriumsulfat ergänzt. Die Builder-Wirkung wurde als Remissionszunahme an den Testgeweben ermittelt. Die Auswertung erfolgte in gewohnter Weise.

| Remissionswerte: | | | | | | | |
|---|---|---|---|---|---|---|---|
| Builder | Builder-Konzentration | | | | | | |
| | 0 | 0,25 | 0,5 | 0,75 | 1,0 | 1,5 | 2,0 |
| PBA | 44,5 | 44,8 | 45,0 | 47,2 | 48,8 | 54,2 | 55,0 |
| NTA | 44,2 | 44,0 | 44,8 | 45,8 | 48,4 | 55,3 | 55,1 |
| CP 5 | 43,8 | 44,0 | 45,1 | 47,9 | 54,9 | 55,2 | 54,8 |

Die Ergebnisse lassen erkennen, daß die Builder-Wirkung des erfindungsgemäßen Copolymerisats (PBA) mit der von NTA vergleichbar ist.

**Beispiel 6**

Waschversuche im Launder-o-meter (Bleichwirkung)

Die Versuche wurden bei 40 °C und 60 °C im Launder-o-meter unter Verwendung der Testanschmutzungen Tee auf WFK-Baumwolle und Rotwein auf EMPA-Baumwolle durchgeführt. Die Wasserhärte betrug 0 °dH, die Waschzeit 30 min. Als Waschmittel wurden 1,5 g/l IEC-Waschmittel eingesetzt. Als Bleichsystem wurden a) 900 mg/l Natriumperborat-Tetrahydrat, b) 900 mg/l Natriumperborat-Tetrahydrat und an 220 mg/l Tetraacatylethylendiamin (TAED) und c) 900 mg/l Natriumperborat-Tetrahydrat und 700 mg/l des erfindungsgemäßen polymeren Builderaktivators (PBA) gemäß Beispiel 1 eingesetzt.

Die Bleichleistung wurde als Remissionszunahme an den verschiedenen Testgeweben bestimmt. Die Auswertung erfolgte in gewohnter Weise.

| I) Wasserhärte 0 °dH | | | | |
|---|---|---|---|---|
| | Remissionswerte | | | |
| | Tee | | Rotwein | |
| Bleichsystem | 40 °C | 60 °C | 40 °C | 60 °C |
| Perborat | 60,3 | 61,9 | 52,4 | 54,6 |
| TAED/Perborat | 72,5 | 77,4 | 64,6 | 67,6 |
| PBA/Perborat | 69,7 | 75,6 | 60,4 | 62,4 |
| II) Wasserhärte 23 °dH | | | | |
| | Remissionswerte | | | |
| | Tee | | Rotwein | |
| Bleichsystem | 40 °C | 60 °C | 40 °C | 60 °C |
| Perborat | 47,7 | 46,7 | 51,2 | 55,5 |
| TAED/Perborat | 65,2 | 69,8 | 61,5 | 68,1 |
| PBA/Perborat | 67,0 | 73,1 | 59,1 | 66,4 |

## Ansprüche

1. Polymerisate aus 5 bis 100 Gew.-% eines oder mehrerer Acylale der Formel I

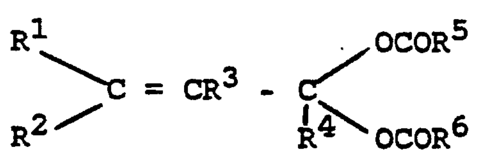

(I)

worin

$R^1$ Wasserstoff, $C_1$-$C_4$-Alkyl, Phenyl oder eine Gruppe der Formel

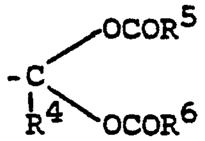

$R^2$ Wasserstoff oder $C_1$-$C_4$-Alkyl,

$R^3$ Wasserstoff, $C_1$-$C_4$-Alkyl oder Phenyl,

$R^4$ Wasserstoff, $C_1$-$C_4$-Alkyl oder Phenyl,

$R^5$ und $R^6$, die jeweils gleich oder verschieden sein können, Wasserstoff, $C_1$-$C_9$-Alkyl, $C_2$-$C_9$-Alkenyl oder Phenyl oder
$R^5$ und $R^6$ zusammen $C_1$-$C_4$-Alkylen, $C_2$-$C_4$-Alkenylen oder Phenylen bedeuten, und 95 bis 0 Gew.-% einer oder mehrerer ungesättigter Carbonsäuren oder derer Salze der Formel II

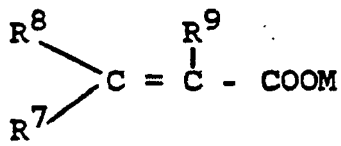

(II)

worin
$R^7$ Wasserstoff, $C_1$-$C_4$-Alkyl, Phenyl oder eine Gruppe der Formeln -$C_1$-$C_4$-Alkyl-COOM oder -$C_6H_5$-COOM,
$R^8$ Wasserstoff, $C_1$-$C_4$-Alkyl, Phenyl oder eine Gruppe der Formel -COOM
$R^9$ Wasserstoff, $C_1$-$C_4$-Alkyl, Phenyl, Hydroxyl, Chlor, Brom oder eine Gruppe der Formel -$C_1$-$C_4$-Alkyl-COOM oder -$C_6H_5$-COOM und
M Wasserstoff, Ammonium, ein Alkalimetall-Atom oder das Äquivalent eines Erdalkalimetall-Atoms bedeuten.

2. Polymerisate nach Anspruch 1, dadurch gekennzeichnet, daß bei den Acylalen der Formel 1 $R^1$ Wasserstoff, Methyl oder Phenyl, $R^2$ Wasserstoff oder Methyl, $R^3$ Wasserstoff oder Methyl, $R^4$ Wasserstoff oder $C_1$-$C_4$-Alkyl, $R^5$ und $R^6$ $C_1$-$C_9$-Alkyl oder Phenyl bedeuten, und bei den ungesättigten Carbonsäuren der Formel II $R^7$ Wasserstoff, Methyl, -COOM oder Phenyl, $R^8$ Wasserstoff und $R^9$ Wasserstoff oder Methyl bedeuten und M die in Anspruch 1 genannten Bedeutungen hat.

3. Polymerisate nach Anspruch 1 aus 5 bis 50 Mol.-% eines oder mehrerer Acylale der Formel 1 und 95 bis 50 Mol.-% einer oder mehrerer ungesättigter Carbonsäuren der Formel II.

4. Verfahren zur Herstellung der Polymerisate nach Anspruch 1, dadurch gekennzeichnet, daß man Verbindungen der Formeln I und II polymerisiert.

5. Verwendung der Polymerisate nach Anspruch 1 als Bleichaktivatoren und Buildern in Waschmitteln.

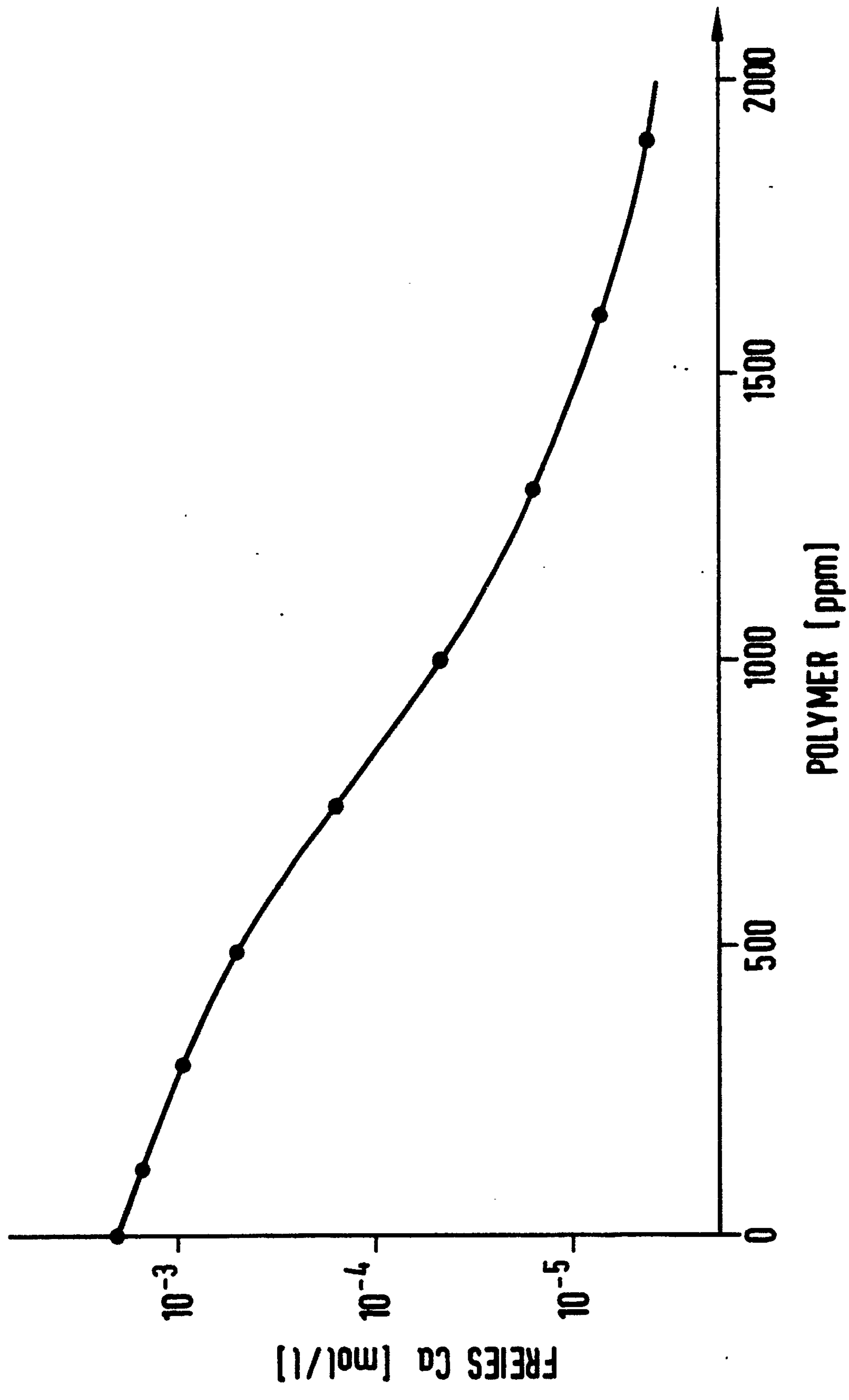
POLYMER [ppm]
0
500
1000
1500
2000
FREIES Ca [mol/l]
10^-3
10^-4
10^-5